# DEMANDE DE BREVET EUROPEEN

(11) **EP 4 729 845 A1**
(43) Date de publication de la demande: **22.04.2026**
(21) Numéro de dépôt: 25209987.4
(22) Date de dépôt: 21.10.2025
(51) Int. Cl.: F24F 11/00, E05F 15/71, F24F 11/64, H04L 12/28

(54) **PROCÉDÉ DE GESTION DE LA VENTILATION D AU MOINS UNE PREMIÈRE ZONE D'UN BÂTIMENT**

(30) Priorité: 21.10.2024 FR 2411428
(71) Demandeur: Somfy Activites SA, 74300 Cluses (FR)
(72) Inventeur: BERNABEU, Noé, 74300 CLUSES (FR); RAYBAUD, Blaise, 74300 CLUSES (FR)
(74) Mandataire: Novaimo

(57) **Abrégé**

Procédé de gestion de la ventilation d'au moins une première zone (Z1) d'un bâtiment (B) par :
- configuration d'au moins un premier ouvrant (401) manoeuvrable manuellement et équipant une ouverture (1) de l'au moins une première zone (Z1), et/ou
- configuration d'un mode de fonctionnement d'un dispositif électromécanique d'occultation débouchant dans l'au moins un première zone (Z1), le procédé comprenant les étapes suivantes :
- détection d'un événement ou d'une heure,
- simulation d'une évolution de la température dans l'au moins une première zone (Z1) du bâtiment (B) pendant une période déterminée à venir dans l'hypothèse d'une situation de ventilation et d'une évolution de la température dans l'au moins une première zone (Z1) du bâtiment pendant la période déterminée à venir dans l'hypothèse d'une situation d'absence de ventilation,
- communication des simulations à un utilisateur et/ou émission, à l'attention d'un utilisateur, d'une recommandation de ventiler ou de ne pas ventiler l'au moins une première zone (Z1) pendant la période déterminée à venir.

## Description

La présente invention concerne un procédé de gestion de la ventilation d'au moins une zone d'un bâtiment. L'invention concerne aussi un dispositif adapté à mettre en œuvre ce procédé de gestion.

Lors de périodes de chaleur, la ventilation naturelle d'un bâtiment par ouverture des fenêtres la nuit est l'une des manières les plus efficaces pour le rafraichir. Le moment idéal pour commencer un rafraîchissement nocturne démarre lorsque la température extérieure devient inférieure à la température intérieure.

Lorsque les ouvrants ne sont pas motorisés, il faut donc qu'un occupant du bâtiment se charge d'ouvrir les fenêtres aux bons moments. Ceci n'est pas toujours possible si ces moments (ils peuvent être différents par zone du bâtiment ils sont les destinations des bâtiments) tombent pendant une phase de sommeil des occupants ou une période d'inoccupation du bâtiment (notamment pour les bâtiments industriels et tertiaires).

Lors des vagues de chaleur, il arrive donc fréquemment que les moments idéaux pour rafraichir, la nuit, un bâtiment par ouverture des fenêtres et éventuellement par ouverture/fermeture d'un dispositif d'occultation coïncident avec des périodes où les occupants sont en phase de sommeil, ou où le bâtiment est inoccupé. Il n'est alors pas évident pour les occupants de savoir :
- s'il vaut mieux ouvrir des ouvrants et éventuellement le dispositif d'occultation juste avant d'aller se coucher (ou de quitter le bâtiment), ou
- s'il vaut mieux garder les ouvrants fermés et maintenir le dispositif d'occultation fermé toute la nuit (ou toute la période où le bâtiment est inoccupé), ou
- dans le cas de dispositifs d'occultation motorisés, s'il convient de laisser un automatisme activé, celui-ci pouvant piloter le dispositif d'occultation de manière automatique en fonction de différents critères.

La présente invention a pour but de résoudre les inconvénients précités et de proposer un procédé de gestion de la ventilation d'au moins une zone d'un bâtiment, ainsi qu'un dispositif adapté à mettre en œuvre ce procédé de gestion. L'invention propose en particulier un procédé permettant d'améliorer le confort thermique et de minimiser la consommation d'énergie dans un bâtiment.

Selon l'invention, le procédé permet de gérer la ventilation d'au moins une première zone d'un bâtiment munie d'une ouverture par :
- configuration d'au moins un premier ouvrant manœuvrable manuellement et équipant l'ouverture de l'au moins une première zone, et
- éventuellement, configuration d'un mode de fonctionnement d'un dispositif électromécanique d'occultation de l'ouverture de l'au moins un première zone.

Le procédé comprend les étapes suivantes :
- détection d'un événement ou d'une heure,
- simulation d'une évolution de la température dans l'au moins une première zone du bâtiment pendant une période déterminée à venir dans l'hypothèse d'une situation de ventilation liée à une ouverture du premier ouvrant et éventuellement du dispositif électromécanique d'occultation et d'une évolution de la température dans l'au moins une première zone du bâtiment pendant la période déterminée à venir dans l'hypothèse d'une situation d'absence de ventilation liée à une fermeture du premier ouvrant et éventuellement du dispositif électromécanique d'occultation,
- communication des simulations à un utilisateur et/ou émission, à l'attention d'un utilisateur, d'une recommandation de ventiler, par ouverture du premier ouvrant et éventuellement du dispositif électromécanique d'occultation, ou de ne pas ventiler, par fermeture du premier ouvrant et éventuellement du dispositif électromécanique d'occultation, l'au moins une première zone pendant la période déterminée à venir.

Le procédé peut comprendre une étape de définition d'au moins une plage horaire durant laquelle l'utilisateur ne peut pas manœuvrer l'au moins un premier ouvrant.

Le procédé peut comprendre une étape de commande de manœuvre motorisée d'un écran équipant l'au moins une ouverture.

De préférence, pendant la période déterminée :
- l'écran est ouvert lorsqu'une température extérieure au bâtiment est inférieure à une température dans l'au moins une première zone, et
- l'écran est fermé lorsqu'une température extérieure au bâtiment est supérieure à une température dans l'au moins une première zone ou lorsqu'une une température dans l'au moins une première zone est inférieure à un premier seuil.

Chaque simulation peut comprendre :
- la détermination d'une estimation d'une heure à laquelle une température extérieure au bâtiment est égale à une température dans l'au moins une première zone, et/ou
- la détermination d'une estimation d'une température dans l'au moins une première zone en fin de période déterminée à venir, et/ou
- la détermination d'une estimation d'une durée durant laquelle une température dans l'au moins une première zone est inférieure à un premier seuil.

La recommandation de ventiler ou de ne pas ventiler peut être émise :
- en continu pendant la période déterminée, ou
- sur demande, notamment sur demande de l'utilisateur, ou
- à intervalles de temps réguliers pendant la période déterminée, ou
- à chaque fois que la configuration devrait être modifiée pendant la période déterminée.

Chaque simulation peut comprendre un calcul d'un indice de confort, notamment basé sur des durées de dépassement de seuils par la température de l'au moins une première zone pendant la période déterminée.

Le procédé peut comprendre en outre les étapes suivantes :
- simulation d'une évolution de la température dans une deuxième zone du bâtiment pendant la période déterminée à venir dans l'hypothèse d'une ventilation et d'une évolution de la température dans la deuxième zone du bâtiment pendant la période déterminée à venir dans l'hypothèse d'une absence de ventilation,
- communication des simulations à un utilisateur et/ou émission, à l'attention d'un utilisateur, d'une recommandation de ventiler ou de ne pas ventiler la deuxième zone pendant la période déterminée à venir.

Selon l'invention, un dispositif, notamment un terminal mobile, comprend des éléments matériels et/ou logiciels configurés pour mettre en œuvre le procédé de gestion défini précédemment.

Selon l'invention, une installation comprend :
- un moyen de détermination de l'évolution de la température extérieure au bâtiment au cours des prochaines heures, notamment au cours de la nuit à venir, et
- au moins un thermomètre permettant de connaître une ou plusieurs températures à l'intérieur du bâtiment.

Selon l'invention, un produit programme d'ordinateur comprend des instructions de code de programme enregistrées sur un support lisible par ordinateur pour mettre en œuvre les étapes du procédé défini précédemment lorsque ledit programme fonctionne sur un ordinateur.

Selon l'invention, un programme d'ordinateur téléchargeable depuis un réseau de communication et/ou enregistré sur un support de données lisible par un ordinateur et/ou exécutable par un ordinateur est caractérisé en ce en ce qu'il comprend des instructions qui, lorsque le programme est exécuté par l'ordinateur, conduisent celui-ci à mettre en œuvre le procédé défini précédemment.

La présente invention porte encore :
- sur un support d'enregistrement de données, lisible par un ordinateur, sur lequel est enregistré un programme d'ordinateur comprenant des instructions de code de programme de mise en œuvre du procédé défini précédemment, ou
- sur un support d'enregistrement lisible par ordinateur comprenant des instructions qui, lorsqu'elles sont exécutées par un ordinateur, conduisent celui-ci à mettre en œuvre le procédé défini précédemment.

L'invention porte encore sur un signal d'un support de données, portant le produit programme d'ordinateur défini précédemment.

D'autres particularités et avantages de l'invention apparaîtront encore dans la description ci-après, faite en référence aux dessins annexés, donnés à titre d'exemples non limitatifs et dans lesquels :
La figure 1 est une vue schématique en coupe transversale d'une installation d'occultation conforme à un mode de réalisation de l'invention, l'installation d'occultation comprenant un dispositif d'occultation comprenant éventuellement un dispositif d'entraînement motorisé.
La figure 2 est une vue schématique en perspective de l'installation d'occultation illustrée à la figure 1.
La figure 3 est une vue schématique en coupe axiale et partielle de l'installation d'occultation illustrée aux figures 1 et 2, montrant un actionneur électromécanique du dispositif d'entraînement motorisé.
La figure 4 est un schéma d'un bâtiment auquel on applique le procédé de gestion de la ventilation.
La figure 5 est un ordinogramme d'un mode d'exécution du procédé de gestion de la ventilation selon l'invention.
La figure 6 est un graphique illustrant les évolutions de la température extérieure au bâtiment et des températures intérieures au bâtiment dans le cas d'application d'une logique de ventilation, les conditions de température apparaissant défavorables à l'application d'une logique de ventilation.
La figure 7 est un graphique illustrant les évolutions de la température extérieure au bâtiment et des températures intérieures au bâtiment dans le cas où aucune logique de ventilation n'est appliquée, les conditions de température apparaissant favorables à l'application d'une logique de ventilation.

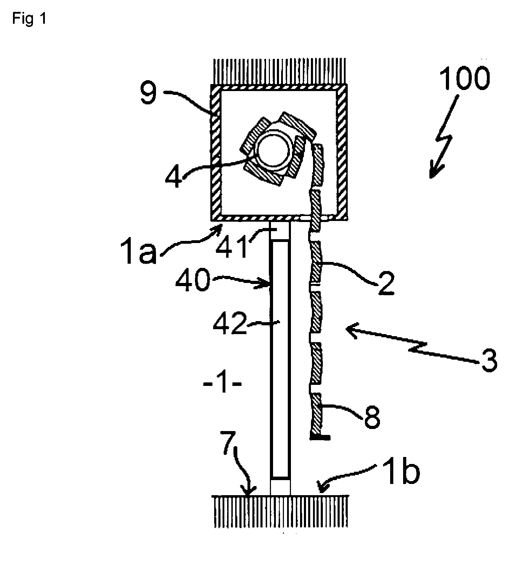

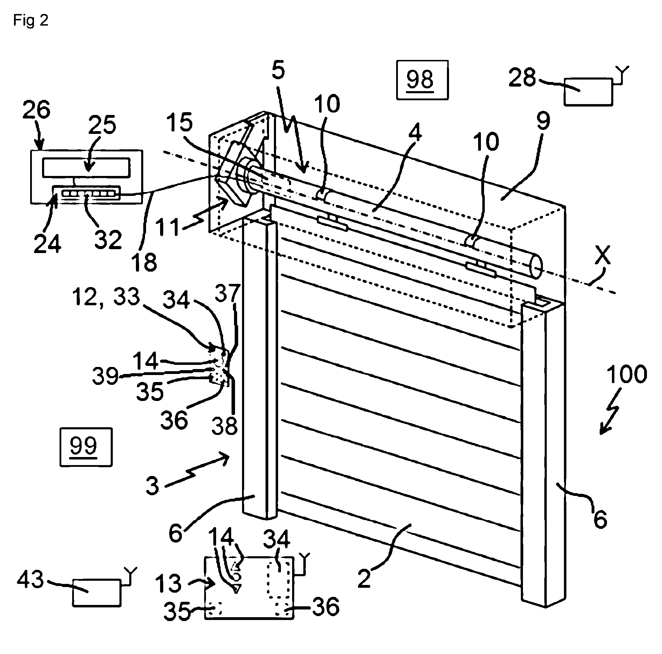

On décrit tout d'abord, en référence aux figures 1 et 2, une installation d'occultation 100. Cette installation d'occultation 100 comprend un bâtiment B, au moins une fenêtre 40 et au moins un dispositif d'occultation 3.

Le bâtiment B comprend au moins un mur W. Le mur W comprend au moins une ouverture 1.

La fenêtre 40 est logée à l'intérieur de l'ouverture 1 du mur W.

Avantageusement, la fenêtre 40 comprend au moins un cadre dormant 41 et au moins une vitre 42. La vitre 42 est disposée à l'intérieur du cadre dormant 41, en particulier dans une configuration assemblée de la fenêtre 40.

Avantageusement, la fenêtre 40 peut, en outre, comprendre au moins un ouvrant 401.

Avantageusement, la vitre 42 peut être soit montée dans le cadre dormant 41, dans le cas où celle-ci est fixe par rapport au cadre dormant 41, soit montée dans un cadre de l'ouvrant 401, dans le cas où celle-ci est mobile par rapport au cadre dormant 41, en particulier selon un mouvement de rotation, notamment dans le cas d'une fenêtre oscillante ou battante, ou selon un mouvement de translation, notamment dans le cas d'une fenêtre coulissante selon une direction horizontale ou verticale, ou selon deux mouvements de rotation, notamment dans le cas d'une fenêtre oscillo-battante.

Le dispositif d'occultation 3 comprend un écran 2, en particulier un volet roulant. L'écran 2 du dispositif d'occultation 3 sert à occulter plus ou moins l'ouverture 1.

Avantageusement, le dispositif d'occultation 3 comprend, en outre, un coffre 9.

Le dispositif d'occultation 3 peut être un volet roulant, un store en toile ou avec des lames orientables, un portail roulant, une grille, ou encore une porte. La présente invention s'applique à tous les types de dispositifs d'occultation.

L'écran 2 est configuré pour être disposé en vis-à-vis de la fenêtre 40, de sorte à obturer partiellement ou complètement l'ouverture 1 ménagée dans le mur W. En principe, l'occultation liée au à l'écran n'est pas aussi étanche à l'air que celle prévue par une fenêtre. Ainsi, lorsque la fenêtre 4 est ouverte et que l'écran 2 est baissé, une certaine ventilation du bâtiment peut avoir lieu.

Une installation de fermeture et une installation de protection solaire sont des exemples d'installations d'occultation. De même, un dispositif de fermeture et un dispositif de protection solaire sont des exemples de dispositifs d'occultation.

L'installation de fermeture, d'occultation ou de protection solaire est par la suite appelée « installation d'occultation » 100.

Le dispositif de fermeture, d'occultation ou de protection solaire est par la suite appelé « dispositif d'occultation » ou « dispositif électromécanique d'occultation » 3.

On décrit, en référence aux figures 1 et 2, un dispositif électromécanique d'occultation utilisable dans un mode de réalisation de l'invention.

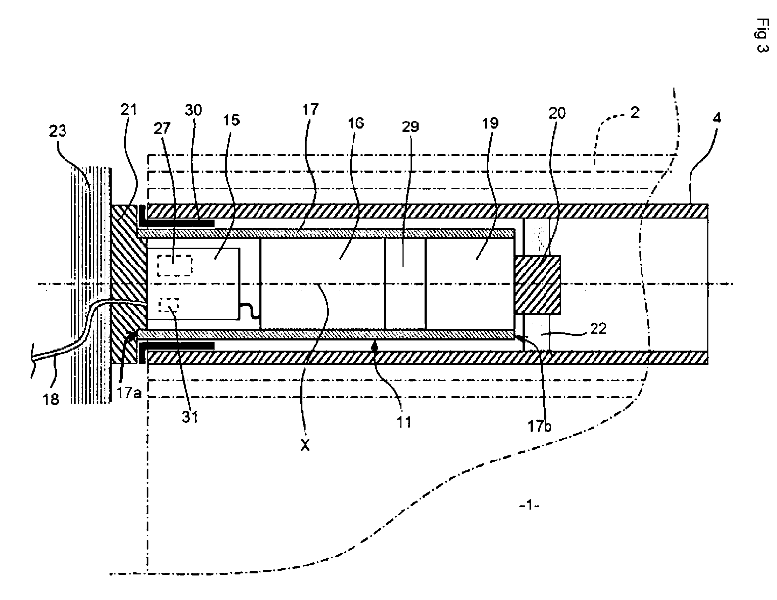

Le dispositif électromécanique d'occultation 3 comprend un dispositif d'entraînement motorisé 5. Le dispositif d'entraînement motorisé 5 comprend un actionneur électromécanique 11 illustré à la figure 3.

Avantageusement, le dispositif électromécanique d'occultation 3 comprend, en outre, un tube d'enroulement 4. L'écran 2 est enroulable sur le tube d'enroulement 4. En outre, le tube d'enroulement 4 est agencé de sorte à être entraîné en rotation par l'actionneur électromécanique 11.

Ainsi, l'écran 2 du dispositif électromécanique d'occultation 3 est enroulé sur le tube d'enroulement 4 ou déroulé autour de celui-ci, le tube d'enroulement 4 étant entraîné par le dispositif d'entraînement motorisé 5, en particulier par l'actionneur électromécanique 11.

De cette manière, l'écran 2 est mobile entre une position enroulée, en particulier haute, et une position déroulée, en particulier basse, et inversement.

L'écran 2 du dispositif électromécanique d'occultation 3 est un écran de fermeture, d'occultation et/ou de protection solaire, s'enroulant et se déroulant autour du tube d'enroulement 4, dont le diamètre intérieur est supérieur au diamètre externe de l'actionneur électromécanique 11, de sorte que l'actionneur électromécanique 11 peut être inséré dans le tube d'enroulement 4, lors de l'assemblage du dispositif électromécanique d'occultation 3.

L'actionneur électromécanique 11, en particulier de type tubulaire, permet de mettre en rotation le tube d'enroulement 4 autour d'un axe de rotation X, de sorte à déplacer, en particulier dérouler ou enrouler, l'écran 2 du dispositif électromécanique d'occultation 3.

Dans un état monté du dispositif électromécanique d'occultation 3, l'actionneur électromécanique 11 est inséré dans le tube d'enroulement 4.

De manière connue, le volet roulant, qui forme le dispositif électromécanique d'occultation 3, comporte un tablier comprenant des lames horizontales articulées les unes aux autres, formant l'écran 2 du volet roulant 3, et guidées par deux coulisses latérales 6, représentées uniquement à la figure 2. Ces lames sont jointives lorsque le tablier 2 du volet roulant 3 atteint sa position basse déroulée.

Dans le cas d'un volet roulant, la position haute enroulée correspond à la mise en appui d'une lame d'extrémité finale 8, par exemple en forme de L, du tablier 2 du volet roulant 3 contre un bord d'un coffre 9 du volet roulant 3 ou à l'arrêt de la lame d'extrémité finale 8 dans une position de fin de course haute programmée. En outre, la position basse déroulée correspond à la mise en appui de la lame d'extrémité finale 8 du tablier 2 du volet roulant 3 contre un seuil 7 de l'ouverture 1 ou à l'arrêt de la lame d'extrémité finale 8 dans une position de fin de course basse programmée.

Ici, l'écran 2 est configuré pour être déplacé, au moyen du dispositif d'entraînement motorisé 5, en particulier de l'actionneur électromécanique 11, entre une position ouverte, correspondant à la position enroulée et pouvant également être appelée première position de fin de course ou position de fin de course haute FdCH, et une position fermée, correspondant à la position déroulée et pouvant également être appelée deuxième position de fin de course ou position de fin de course basse FdCB.

Ainsi, l'actionneur électromécanique 11 est configuré pour entraîner, autrement dit entraîne, en déplacement l'écran 2, entre la première position de fin de course FdCH et la deuxième position de fin de course FdCB, et inversement, en vis-à-vis de la fenêtre 40, en particulier de la vitre 42.

Ici, l'écran 2 est disposé à l'extérieur du bâtiment.

La première lame du volet roulant 3, opposée à la lame d'extrémité finale 8, est reliée au tube d'enroulement 4 au moyen d'au moins une articulation 10, en particulier une pièce d'attache en forme de bande.

Le tube d'enroulement 4 est disposé à l'intérieur du coffre 9 du volet roulant 3. Le tablier 2 du volet roulant 3 s'enroule et se déroule autour du tube d'enroulement 4 et est logé au moins en partie à l'intérieur du coffre 9.

De manière générale, le coffre 9 est disposé au-dessus de l'ouverture 1, ou encore en partie supérieure de l'ouverture 1.

Avantageusement, le dispositif d'entraînement motorisé 5 est commandé par une unité de commande. L'unité de commande peut être, par exemple, une unité de commande locale 12 ou une unité de commande centrale 13.

Avantageusement, l'unité de commande locale 12 peut être reliée, en liaison filaire ou non filaire, avec l'unité de commande centrale 13.

Avantageusement, l'unité de commande centrale 13 peut piloter l'unité de commande locale 12, ainsi que d'autres unités de commande locales similaires et réparties dans le bâtiment B.

Le dispositif d'entraînement motorisé 5 est, de préférence, configuré pour exécuter les commandes de déroulement ou d'enroulement de l'écran 2 du dispositif électromécanique d'occultation 3, pouvant être émises, notamment, par l'unité de commande locale 12 ou l'unité de commande centrale 13.

L'installation d'occultation 100 comprend soit l'unité de commande locale 12, soit l'unité de commande centrale 13, soit l'unité de commande locale 12 et l'unité de commande centrale 13.

Un automatisme de commande du dispositif électromécanique d'occultation 3 peut être inclus dans une unité de commande locale 12 ou centrale 13 et piloter le dispositif d'entraînement motorisé par exemple en fonction de conditions environnantes comme la température, l'humidité, l'heure. L'automatisme peut être activé ou désactivé, dans ce dernier cas il ne pilote plus automatiquement le dispositif d'entraînement motorisé.

Alternativement, le dispositif d'occultation est manoeuvré manuellement. Dans ce cas, la structure est sensiblement identique à la description ci-dessus à l'exception du dispositif d'entraînement motorisé.

On décrit à présent, plus en détail et en référence à la figure 3, le dispositif d'entraînement motorisé 5, y compris l'actionneur électromécanique 11, appartenant à l'installation d'occultation 100 et, plus particulièrement, au dispositif électromécanique d'occultation 3 illustré aux figures 1 et 2.

L'actionneur électromécanique 11 comprend au moins un moteur électrique 16.

Le moteur électrique 16 est représenté par son enveloppe à la figure 3, sans détails sur ses éléments constitutifs internes.

Avantageusement, le moteur électrique 16 comprend un rotor et un stator, non représentés et positionnés de manière coaxiale autour de l'axe de rotation X, qui est également l'axe de rotation du tube d'enroulement 4 en configuration montée du dispositif d'entraînement motorisé 5.

Ici, le moteur électrique 16 peut être de type sans balais à commutation électronique, appelé également « BLDC » (acronyme du terme anglo-saxon BrushLess Direct Current) ou « synchrone à aimants permanents », ou du type à courant continu.

Des moyens de commande de l'actionneur électromécanique 11, permettant le déplacement de l'écran 2 du dispositif électromécanique d'occultation 3, comprennent au moins une unité électronique de contrôle 15. Cette unité électronique de contrôle 15 est apte à mettre en fonctionnement le moteur électrique 16 de l'actionneur électromécanique 11 et, en particulier, permettre l'alimentation en énergie électrique du moteur électrique 16.

Ainsi, l'unité électronique de contrôle 15 commande, notamment, le moteur électrique 16, de sorte à ouvrir ou fermer l'écran 2, comme décrit précédemment.

Les moyens de commande de l'actionneur électromécanique 11 comprennent des moyens matériels et/ou logiciels.

A titre d'exemple nullement limitatif, les moyens matériels peuvent comprendre au moins un microcontrôleur 31.

Ici, le dispositif d'entraînement motorisé 5 comprend l'unité électronique de contrôle 15. En outre, l'unité électronique de contrôle 15 comprend le microcontrôleur 31.

Avantageusement, l'unité électronique de contrôle 15 comprend, en outre, un premier module de communication 27, en particulier de réception d'ordres de commande, les ordres de commande étant émis par un émetteur d'ordres, tel que l'unité de commande locale 12 ou l'unité de commande centrale 13, ces ordres étant destinés à commander le dispositif d'entraînement motorisé 5.

Avantageusement, le premier module de communication 27 de l'unité électronique de contrôle 15 est de type sans fil. En particulier, le premier module de communication 27 est configuré pour recevoir des ordres de commande radioélectriques.

Avantageusement, le premier module de communication 27 peut également permettre la réception d'ordres de commande transmis par des moyens filaires.

Avantageusement, l'unité électronique de contrôle 15, l'unité de commande locale 12 et/ou l'unité de commande centrale 13 peuvent être en communication avec une station météorologique, non représentée, disposée à l'intérieur du bâtiment ou déportée à l'extérieur du bâtiment, incluant, notamment, un ou plusieurs capteurs pouvant être configurés pour déterminer, par exemple, une température, une luminosité, ou encore une vitesse de vent, dans le cas où la station météorologique est déportée à l'extérieur du bâtiment.

Avantageusement, l'unité électronique de contrôle 15, l'unité de commande locale 12 et/ou l'unité de commande centrale 13 peuvent également être en communication avec un serveur 28, tel qu'illustré à la figure 2, de sorte à contrôler l'actionneur électromécanique 11 suivant des données mises à disposition à distance par l'intermédiaire d'un réseau de communication, en particulier un réseau internet pouvant être relié au serveur 28.

L'unité électronique de contrôle 15 peut être commandée à partir de l'unité de commande locale 12 et/ou de l'unité de commande centrale 13. L'unité de commande locale 12 et/ou l'unité de commande centrale 13 est pourvue d'un clavier de commande. Le clavier de commande de l'unité de commande locale 12 ou de l'unité de commande centrale 13 comprend un ou plusieurs éléments de sélection 14 et, éventuellement, un ou plusieurs éléments d'affichage 34.

A titre d'exemples nullement limitatifs, les éléments de sélection peuvent comprendre des boutons poussoirs et/ou des touches sensitives. Les éléments d'affichage peuvent comprendre des diodes électroluminescentes et/ou un afficheur, par exemple LCD (acronyme du terme anglo-saxon « Liquid Crystal Display ») ou TFT (acronyme du terme anglo-saxon « Thin Film Transistor »). Les éléments de sélection et d'affichage peuvent être également réalisés au moyen d'un écran tactile.

Avantageusement, l'unité de commande locale 12 et/ou l'unité de commande centrale 13 comprend au moins un deuxième module de communication 36.

Ainsi, le deuxième module de communication 36 de l'unité de commande locale 12 ou de l'unité de commande centrale 13 est configuré pour émettre, autrement dit émet, des ordres de commande, en particulier par des moyens sans fil, par exemple radioélectriques, ou par des moyens filaires.

En outre, le deuxième module de communication 36 de l'unité de commande locale 12 ou de l'unité de commande centrale 13 peut également être configuré pour recevoir, autrement dit reçoit, des ordres de commande, en particulier par l'intermédiaire des mêmes moyens.

Avantageusement, le deuxième module de communication 36 de l'unité de commande locale 12 ou de l'unité de commande centrale 13 est configuré pour communiquer, autrement dit communique, avec le premier module de communication 27 de l'unité électronique de contrôle 15.

Ainsi, le deuxième module de communication 36 de l'unité de commande locale 12 ou de l'unité de commande centrale 13 échange des ordres de commande avec le premier module de communication 27 de l'unité électronique de contrôle 15, soit de manière monodirectionnelle, soit de manière bidirectionnelle.

Avantageusement, l'unité de commande locale 12 est un point de commande, pouvant être fixe ou nomade. Un point de commande fixe peut être un boîtier de commande destiné à être fixé sur une face du mur W du bâtiment B ou sur une face du cadre dormant 41 de la fenêtre 40 ou d'une porte. Un point de commande nomade peut être une télécommande, un téléphone intelligent ou une tablette.

Avantageusement, l'unité de commande locale 12 et/ou l'unité de commande centrale 13 comprend, en outre, un contrôleur 35.

Le dispositif d'entraînement motorisé 5, en particulier l'unité électronique de contrôle 15, est, de préférence, configuré pour exécuter des ordres de commande de déplacement, notamment de fermeture ainsi que d'ouverture, de l'écran 2 du dispositif électromécanique d'occultation 3. Ces ordres de commande peuvent être émis, notamment, par l'unité de commande locale 12 ou par l'unité de commande centrale 13.

Le dispositif d'entraînement motorisé 5 peut être contrôlé par l'utilisateur, par exemple par la réception d'un ordre de commande correspondant à un appui sur le ou l'un des éléments de sélection 14 de l'unité de commande locale 12 ou de l'unité de commande centrale 13.

Le dispositif d'entraînement motorisé 5 peut également être contrôlé automatiquement, par l'automatisme, par exemple par la réception d'un ordre de commande correspondant à au moins un signal provenant d'au moins un capteur 44 et/ou à un signal provenant d'une horloge, non représentée, de l'unité électronique de contrôle 15, en particulier du microcontrôleur 31. Le capteur 44 et/ou l'horloge peuvent être intégrés à l'unité de commande locale 12 ou à l'unité de commande centrale 13.

Avantageusement, l'actionneur électromécanique 11 comprend, en outre, un carter 17, en particulier tubulaire. Le moteur électrique 16 est monté à l'intérieur du carter 17, en particulier dans une configuration assemblée de l'actionneur électromécanique 11.

Le carter 17 est creux. Le carter 17 comprend une première extrémité 17a et une deuxième extrémité 17b. La deuxième extrémité 17b est opposée à la première extrémité 17a.

Ici, le carter 17 de l'actionneur électromécanique 11 est de forme cylindrique, notamment de révolution autour de l'axe de rotation X, et est ouvert à chacune de ses extrémités 17a, 17b.

Avantageusement, le carter 17 est un tube présentant une section circulaire.

Dans un exemple de réalisation, le carter 17 est réalisé dans un matériau métallique.

La matière du carter de l'actionneur électromécanique n'est pas limitative et peut être différente. Il peut s'agir, en particulier, d'une matière plastique.

Avantageusement, l'actionneur électromécanique 11 comprend, en outre, un arbre de sortie 20.

L'arbre de sortie 20 est disposé, autrement dit est configuré pour être disposé, du côté de la deuxième extrémité 17b du carter 17, en particulier dans la configuration assemblée de l'actionneur électromécanique 11.

Avantageusement, l'actionneur électromécanique 11 comprend, en outre, un réducteur 19.

Le réducteur 19 est représenté par son enveloppe à la figure 3, sans détails sur ses éléments constitutifs internes.

Avantageusement, le réducteur 19 comprend au moins un étage de réduction. L'étage de réduction peut être un train d'engrenages de type épicycloïdal.

Le type et le nombre d'étages de réduction du réducteur ne sont pas limitatifs. Le nombre d'étages de réduction peut être, notamment, égal à un ou supérieur ou égal à deux.

Le réducteur 19 est accouplé, autrement dit est configuré pour être accouplé, avec le moteur électrique 16, en particulier avec le rotor du moteur électrique 16 dans la configuration assemblée de l'actionneur électromécanique 11.

Avantageusement, l'actionneur électromécanique 11 comprend, en outre, un frein 29.

A titre d'exemples nullement limitatifs, le frein 29 peut être un frein à ressort, un frein à came, un frein magnétique ou un frein électromagnétique.

Le frein 29 est configuré pour freiner et/ou pour bloquer en rotation l'arbre de sortie 20, de sorte à réguler la vitesse de rotation du tube d'enroulement 4, lors d'un déplacement de l'écran 2, et à maintenir bloqué le tube d'enroulement 4, lorsque le moteur n'est plus alimenté.

Ici et comme visible à la figure 3, en particulier dans la configuration assemblée de l'actionneur électromécanique 11, le frein 29 est configuré pour être disposé, autrement dit est disposé, entre le moteur électrique 16 et le réducteur 19, c'est-à-dire à la sortie du moteur électrique 16.

En variante, non représentée, en particulier dans la configuration assemblée de l'actionneur électromécanique 11, le frein 29 est configuré pour être disposé, autrement dit est disposé, entre l'unité électronique de contrôle 15 et le moteur électrique 16, autrement dit à l'entrée du moteur électrique 16, entre le réducteur 19 et l'arbre de sortie 20, autrement dit à la sortie du réducteur 19, ou entre deux étages de réduction du réducteur 19.

Avantageusement, le réducteur 19 et, éventuellement, le frein 29 sont montés à l'intérieur du carter 17 de l'actionneur électromécanique 11, en particulier dans la configuration assemblée de l'actionneur électromécanique 11.

Avantageusement, l'actionneur électromécanique 11 comprend, en outre, une couronne 30, autrement dit un manchon. La couronne 30 est configurée pour être disposée, autrement dit est disposée, au niveau de la première extrémité 17a du carter 17, en particulier dans la configuration assemblée de l'actionneur électromécanique 11.

La couronne 30 forme, autrement dit est configurée pour former ou constituer, un palier de guidage en rotation du tube d'enroulement 4, autour du carter 17 de l'actionneur électromécanique 11, en particulier dans une configuration assemblée du dispositif d'entraînement motorisé 5 et, par conséquent, du dispositif électromécanique d'occultation 3.

Avantageusement, l'actionneur électromécanique 11 et, plus particulièrement, l'unité électronique de contrôle 15 comprend, en outre, un dispositif de détection d'obstacle et de fins de course, non représenté, lors de l'enroulement de l'écran 2 et lors du déroulement de cet écran 2. Ce dispositif de détection d'obstacle et de fins de course peut être mécanique ou électronique.

Avantageusement, le dispositif de détection d'obstacle et de fins de course est mis en œuvre au moyen du microcontrôleur 31 de l'unité électronique de contrôle 15 et, en particulier, au moyen d'un algorithme mis en œuvre par ce microcontrôleur 31.

Le tube d'enroulement 4 est entraîné en rotation autour de l'axe de rotation X et du carter 17 de l'actionneur électromécanique 11 en étant soutenu par l'intermédiaire de deux liaisons pivot. La première liaison pivot est réalisée au niveau d'une première extrémité du tube d'enroulement 4 au moyen de la couronne 30 disposée autour de la première extrémité 17a du carter 17 de l'actionneur électromécanique 11. La couronne 30 permet ainsi de réaliser un palier. La deuxième liaison pivot, non représentée à la figure 3, est réalisée au niveau d'une deuxième extrémité du tube d'enroulement 4, non visible sur cette figure, opposée à la première extrémité.

Avantageusement, l'actionneur électromécanique 11 comprend, en outre, un support de couple 21, pouvant également être appelé « tête d'actionneur » ou « point fixe ».

Ici, le support de couple 21 est disposé au niveau de la première extrémité 17a du carter 17 de l'actionneur électromécanique 11, en particulier dans la configuration assemblée de l'actionneur électromécanique 11.

Avantageusement, le support de couple 21 de l'actionneur électromécanique 11 est configuré pour fixer l'actionneur électromécanique 11 sur un bâti 23, en particulier sur une joue du coffre 9.

Ainsi, le support de couple 21 permet de reprendre les efforts exercés par l'actionneur électromécanique 11, en particulier le couple exercé par l'actionneur électromécanique 11, par rapport à la structure du bâtiment B. Le support de couple 21 permet avantageusement de reprendre, en outre, des efforts exercés par le tube d'enroulement 4, notamment le poids du tube d'enroulement 4, de l'actionneur électromécanique 11 et de l'écran 2, et d'assurer la reprise de ces efforts par la structure du bâtiment B.

Ainsi, le support de couple 21 de l'actionneur électromécanique 11 permet de fixer l'actionneur électromécanique 11 sur un bâti 23, en particulier à une joue du coffre 9.

Avantageusement, le support de couple 21 est en saillie au niveau de la première extrémité 17a du carter 17 de l'actionneur électromécanique 11.

Ainsi, une première partie du support de couple 21 est disposée à l'intérieur du carter 17 et une deuxième partie du support de couple 21 est disposée à l'extérieur du carter 17.

Avantageusement, le support de couple 21 obture, autrement dit est configuré pour obturer, la première extrémité 17a du carter 17, en particulier dans la configuration assemblée de l'actionneur électromécanique 11.

Par ailleurs, le support de couple 21 de l'actionneur électromécanique 11 peut permettre de supporter au moins une partie de l'unité électronique de contrôle 15.

Avantageusement, le support de couple 21 est configuré pour être fixé, autrement dit est fixé, au carter 17 au moyen d'un ou plusieurs éléments de fixation, non représentés, en particulier dans la configuration assemblée de l'actionneur électromécanique 11. Le ou les éléments de fixation peuvent être, notamment, des bossages, des vis de fixation, des éléments de fixation par encliquetage élastique, des nervures emmanchées dans des échancrures ou une combinaison de ces différents éléments de fixation.

Ici et comme illustré à la figure 3, la couronne 30 est disposée, autrement dit est configurée pour être disposée, autour d'une partie du carter 17, en particulier dans la configuration assemblée de l'actionneur électromécanique 11. Dans ce cas, la couronne 30 est montée libre en rotation autour du carter 17.

En variante, non représentée, la couronne 30 est disposée, autrement dit est configurée pour être disposée, autour du support de couple 21, en particulier dans la configuration assemblée de l'actionneur électromécanique 11. Dans ce cas, la couronne 30 est montée libre en rotation autour du support de couple 21.

Dans une autre variante, non représentée, la couronne 30 est disposée, autrement dit est configurée pour être disposée, d'une part, autour du support de couple 21 et, d'autre part, autour d'une partie du carter 17, en particulier dans la configuration assemblée de l'actionneur électromécanique 11. Dans un tel cas, la couronne 30 peut être montée libre en rotation, d'une part, autour du support de couple 21 et, d'autre part, autour du carter 17.

Avantageusement, l'unité électronique de contrôle 15 est alimentée en énergie électrique au moyen d'un câble d'alimentation électrique 18.

Ici et tel qu'illustré à la figure 3, l'unité électronique de contrôle 15 est ainsi disposée, autrement dit est intégrée, à l'intérieur du carter 17 de l'actionneur électromécanique 11.

En variante, non représentée, l'unité électronique de contrôle 15 est disposée à l'extérieur du carter 17 de l'actionneur électromécanique 11 et, en particulier, montée sur le coffre 9 ou dans le support de couple 21.

Avantageusement, le support de couple 21 peut comprendre au moins un bouton, non représenté.

Ce ou ces boutons peuvent permettre de réaliser un réglage de l'actionneur électromécanique 11 au travers d'un ou plusieurs modes de configuration, d'appairer avec l'actionneur électromécanique 11 une ou plusieurs unités de commande 12, 13, de réinitialiser un ou plusieurs paramètres, tels que, par exemple, une position de fin de course, de réinitialiser la ou les unités de commande 12, 13 appairées ou encore de commander le déplacement de l'écran 2.

Avantageusement, le support de couple 21 peut comprendre au moins un dispositif d'affichage, non représenté, de sorte à permettre une indication visuelle d'un paramètre de fonctionnement du dispositif d'entraînement motorisé 5.

Avantageusement, le dispositif d'affichage comprend au moins une source d'éclairage, non représentée, en particulier une diode électroluminescente.

Cette ou ces sources d'éclairage sont montées sur une carte électronique de l'unité électronique de contrôle 15 et, éventuellement, un capot transparent ou translucide et/ou un guide de lumière est ou sont prévus, pour permettre le passage de la lumière émise par la ou chacune des sources d'éclairage.

Avantageusement, l'arbre de sortie 20 de l'actionneur électromécanique 11 est disposé à l'intérieur du tube d'enroulement 4 et au moins en partie à l'extérieur du carter 17 de l'actionneur électromécanique 11.

Ici, une extrémité de l'arbre de sortie 20 est en saillie par rapport au carter 17 de l'actionneur électromécanique 11, en particulier par rapport à la deuxième extrémité 17b du carter 17.

Avantageusement, l'arbre de sortie 20 de l'actionneur électromécanique 11 est configuré pour entraîner en rotation, autrement dit entraîne en rotation, un élément de liaison 22. Cet élément de liaison 22 est relié au tube d'enroulement 4, en particulier dans la configuration assemblée du dispositif électromécanique d'occultation 3. L'élément de liaison est, dans l'exemple des figures, réalisé sous la forme d'une roue.

Lors de la mise en fonctionnement de l'actionneur électromécanique 11, le moteur électrique 16 et le réducteur 19 entraînent en rotation l'arbre de sortie 20. En outre, l'arbre de sortie 20 de l'actionneur électromécanique 11 entraîne en rotation le tube d'enroulement 4 par l'intermédiaire de l'élément de liaison 22.

Ainsi, le tube d'enroulement 4 entraîne en rotation l'écran 2 du dispositif électromécanique d'occultation 3, de sorte à ouvrir ou fermer l'ouverture 1.

Le dispositif électromécanique d'occultation 3 et, plus particulièrement, le dispositif d'entraînement motorisé 5 comprend, en outre, un dispositif d'alimentation en énergie électrique 26, visible à la figure 2. L'actionneur électromécanique 11 est relié électriquement au dispositif d'alimentation en énergie électrique 26.

Le dispositif d'alimentation en énergie électrique 26 comprend au moins une batterie 24, de type rechargeable.

Le dispositif d'alimentation en énergie électrique 26 est configuré pour alimenter, autrement dit alimente, en énergie électrique l'actionneur électromécanique 11 et, plus particulièrement, l'unité électronique de contrôle 15 et le moteur électrique 16.

Ainsi, le dispositif d'alimentation en énergie électrique 26 permet d'alimenter en énergie électrique l'actionneur électromécanique 11, sans être lui-même relié électriquement à un réseau d'alimentation électrique du secteur.

Avantageusement, le dispositif d'alimentation en énergie électrique 26 comprend, en outre, au moins un panneau photovoltaïque 25.

L'actionneur électromécanique 11 est relié électriquement au dispositif d'alimentation en énergie électrique 26 et, plus particulièrement, au panneau photovoltaïque 25, en particulier au moyen du câble d'alimentation électrique 18. En outre, la batterie 24 est reliée électriquement à l'unité électronique de contrôle 15, par une liaison électrique L24-15, pouvant faire partie intégrante du câble d'alimentation électrique 18.

Avantageusement, la batterie 24 est configurée pour alimenter, autrement dit alimente, en énergie électrique l'actionneur électromécanique 11, en particulier l'unité électronique de contrôle 15 et le moteur électrique 16.

Avantageusement, dans le cas où le dispositif d'alimentation en énergie électrique 26 comprend le panneau photovoltaïque 25, la batterie 24 est configurée pour être alimentée, autrement dit est alimentée, en énergie électrique par le panneau photovoltaïque 25.

Ainsi, le rechargement de la batterie 24 est mis en œuvre par énergie solaire, au moyen du panneau photovoltaïque 25.

Ici et comme illustré à la figure 2, la batterie 24 est disposée à l'intérieur du coffre 9, en particulier directement à l'intérieur du coffre 9.

En variante, non représentée, la batterie 24 peut être disposée à l'intérieur du tube d'enroulement 4 tout en étant à l'extérieur du carter 17, ou à l'intérieur du carter 17, en particulier dans la configuration assemblée de l'actionneur électromécanique 11. Dans ce dernier cas, l'actionneur électromécanique 11 comprend la batterie 24. Dans ces deux cas, la batterie 24 est également disposée à l'intérieur du coffre 9, étant donné que le tube d'enroulement 4 et l'actionneur électromécanique 11 sont disposés à l'intérieur du coffre 9.

Dans une autre variante, non représentée, la batterie 24 est disposée à l'extérieur du caisson 9 et, plus particulièrement, dans un boîtier, non représenté, qui est disposé à l'extérieur du caisson 9. Le boîtier peut être réalisé, notamment, sous la forme d'une coque adaptée aux formes géométriques de la batterie 24, ou sous la forme d'un profilé comprenant un logement de réception de la batterie 24. Avantageusement, ce boîtier peut supporter le panneau photovoltaïque 25.

Lorsque le support de couple 21 comprend un dispositif d'affichage, le paramètre de fonctionnement que ce dispositif d'affichage permet de visualiser est avantageusement un état de charge de la batterie 24.

Ici, l'actionneur électromécanique 11 comprend le câble d'alimentation électrique 18 permettant son alimentation en énergie électrique, notamment l'alimentation électrique de l'unité électronique de contrôle 15 et l'alimentation électrique du moteur électrique 16, en particulier à partir de la batterie 24.

Avantageusement, la batterie 24 comprend une pluralité d'éléments de stockage d'énergie 32, en particulier reliés électriquement en série. Les éléments de stockage d'énergie 32 de la batterie 24 peuvent être, notamment, des accumulateurs rechargeables.

Avantageusement, le panneau photovoltaïque 25 comprend une pluralité de cellules photovoltaïques 43. Dans ce cas, la batterie 24 est alimentée en énergie électrique au moyen des cellules photovoltaïques 43 du panneau photovoltaïque 25.

Avantageusement, le dispositif d'entraînement motorisé 5, en particulier le panneau photovoltaïque 25 et/ou l'unité électronique de contrôle 15, comprend des éléments de chargement configurés pour charger la batterie 24, à partir de l'énergie solaire récupérée par le panneau photovoltaïque 25. Dans ce cas, le courant circule entre les composants 25, 24 et 15 à travers une liaison filaire, pouvant être distincte du câble d'alimentation en énergie électrique 18.

Ainsi, les éléments de chargement configurés pour charger la batterie 24, à partir de l'énergie solaire, permettent de convertir l'énergie solaire récupérée par le panneau photovoltaïque 25 en énergie électrique.

En variante ou en complément, le dispositif d'entraînement motorisé 5, en particulier l'actionneur électromécanique 11, est alimenté en énergie électrique à partir de la batterie 24, à partir d'une batterie auxiliaire, non représentée, ou à partir d'un réseau d'alimentation électrique du secteur, en particulier par le réseau alternatif commercial, notamment en fonction d'un état de charge de la batterie 24.

Ici, l'unité électronique de contrôle 15 comprend une seule carte électronique, non représentée. En outre, la carte électronique est configurée pour contrôler le moteur électrique 16, pour permettre la recharge de la batterie 24 et, éventuellement, accéder à des fonctions de paramétrage et/ou de configuration de l'actionneur électromécanique 11, au moyen d'éléments de sélection et, éventuellement, d'affichage, non représentés. Comme mentionné ci-dessus, les éléments de chargement de la batterie 24 peuvent être disposés au niveau de la carte électronique.

En variante, non représentée, l'unité électronique de contrôle 15 comprend une première carte électronique et une deuxième carte électronique. La première carte électronique est configurée pour contrôler, autrement dit contrôle, le moteur électrique 16. En outre, la deuxième carte électronique est configurée pour permettre la recharge de la batterie 24 et/ou accéder à des fonctions de paramétrage et/ou de configuration de l'actionneur électromécanique 11, au moyen d'éléments de sélection et, éventuellement, d'affichage, non représentés. Les éléments de chargement de la batterie 24 peuvent être disposés au niveau de la deuxième carte électronique.

Dans le cas où l'unité électronique de contrôle 15 comprend une première carte électronique et une deuxième carte électronique, non représentées, la première carte électronique de l'unité électronique de contrôle 15 peut être disposée à l'intérieur du carter 17 de l'actionneur électromécanique 11. En outre, la deuxième carte électronique peut être disposée à l'intérieur du support de couple 21 de l'actionneur électromécanique 11. Par ailleurs, le support de couple 21 peut comprendre un couvercle, non représenté. En outre, la deuxième carte électronique peut être disposée à l'intérieur d'un logement formé entre une partie du support de couple 21 et le couvercle.

Avantageusement, le panneau photovoltaïque 25 peut être fixé sur le coffre 9, sur le mur W du bâtiment B, sur l'une des coulisses latérales 6, sur la vitre 42 de la fenêtre 40 ou sur le cadre dormant 41 de la fenêtre 40.

L'installation d'occultation 100 comprend, en outre, au moins un dispositif 33, notamment un terminal mobile 33.

Ici, le terminal mobile 33 peut être l'unité de commande locale 12 et comprendre tout ou partie des éléments constituant celle-ci.

Préférentiellement, le terminal mobile 33 est un téléphone intelligent, également appelé « Smartphone » en anglais.

En variante, le terminal mobile 33 peut être une tablette tactile ou un outil de configuration.

Le terminal mobile 33 peut ainsi être tout appareil mobile configuré pour mettre en oeuvre un procédé de détermination d'un état de fonctionnement du dispositif d'entraînement motorisé 5, tel que décrit par la suite.

Avantageusement, le terminal mobile 33 comprend au moins le contrôleur 35.

Ici, le terminal mobile 33 comprend le deuxième module de communication 36, tel que décrit précédemment en référence à l'unité de commande locale 12, de même que les éléments de sélection 14 et d'affichage 34.

Le terminal mobile 33 ou l'installation d'occultation 100 comprennent tous les éléments matériels et logiciels nécessaires à la mise en oeuvre du procédé de gestion objet de l'invention, tel que décrit par la suite. Les éléments peuvent inclure des modules logiciels.

L'installation comprend par exemple
- un moyen de détermination 98 de l'évolution de la température extérieure au bâtiment au cours des prochaines heures, notamment au cours de la nuit à venir, ce moyen de détermination étant par exemple un module de récupération de l'évolution de la température extérieure au bâtiment au cours des prochaines heures, notamment au cours de la nuit à venir, et
- au moins un thermomètre 99 permettant de connaître une ou plusieurs températures à l'intérieur du bâtiment.

L'installation peut également comprendre :
- un ou plusieurs capteurs de détection de la configuration des ouvrants du bâtiment,
- un ou plusieurs capteurs d'ensoleillement, notamment sur des façades du bâtiment,
- des capteurs de présence d'utilisateurs dans le bâtiment.

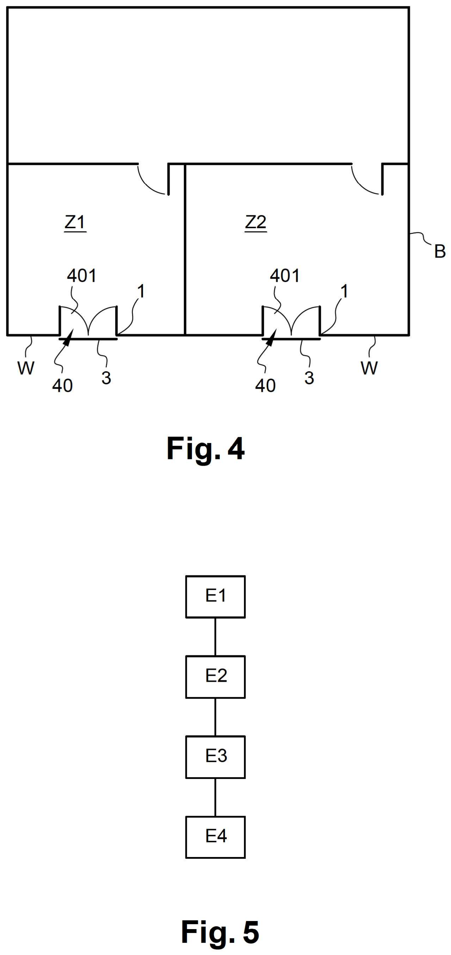

On décrit à présent, en référence aux figures 4 à 7, un mode d'exécution d'un procédé de gestion de la ventilation dans le bâtiment. Le procédé peut être appliqué à l'installation telle que décrite précédemment. En alternative, le procédé peut être appliqué à un bâtiment plus simple qui ne comprend pas d'installation d'occultation motorisée.

Le procédé de gestion est mis en œuvre au moyen du dispositif 33, comme le terminal mobile 33 et, plus particulièrement, au moyen d'une application informatique fonctionnant sur le dispositif 33, laquelle étant éventuellement en lien avec un serveur déporté par rapport à l'installation. Le dispositif 33 peut être très simple et comprendre ou être connecté à :
- le thermomètre 99 intérieur au bâtiment,
- les moyens 98 de connaître une prévision de la température extérieure au bâtiment pour les heures à venir et éventuellement pour connaître la force du vent pour les heures à venir,
- des moyens de calcul pour effectuer des simulations qui sont décrites plus bas.

Autrement dit, le procédé de gestion peut être mis en œuvre par un système à architecture distribuée, différents éléments du système se trouvant à distance les uns des autres et communiquant entre eux.

Le procédé permet de gérer la ventilation d'au moins une première zone Z1 du bâtiment B munie d'une ouverture 1 par :
- configuration d'au moins un premier ouvrant 401 manoeuvrable manuellement et équipant l'ouverture 1 de l'au moins une première zone Z1, et, éventuellement, configuration d'un mode de fonctionnement d'un dispositif électromécanique d'occultation de l'ouverture 1 de l'au moins une première zone Z1.

La première zone Z1 peut donc se trouver :
- dans une situation de ventilation dans laquelle l'au moins un premier ouvrant 401 est ouvert, ou
- dans une situation d'absence de ventilation dans laquelle le premier ouvrant 401 est fermé.

Dans chacune de ces situations, le dispositif électromécanique d'occultation peut être ouvert ou fermé selon les besoins et/ou l'automatisme de commande du dispositif électromécanique d'occultation peut être activé ou désactivé selon les besoins.

Le procédé comprend principalement les étapes suivantes :
- détection E1 d'un événement ou d'une heure,
- simulation E2 d'une évolution de la température dans l'au moins une première zone Z1 du bâtiment B pendant une période déterminée à venir dans l'hypothèse d'une situation de ventilation dans laquelle par exemple le premier ouvrant et éventuellement le dispositif électromécanique d'occultation sont ouverts et d'une évolution de la température dans l'au moins une première zone Z1 du bâtiment pendant la période déterminée à venir dans l'hypothèse d'une situation d'absence de ventilation dans laquelle par exemple le premier ouvrant et éventuellement le dispositif électromécanique d'occultation sont fermés,
- communication E3 des simulations à un utilisateur et/ou émission E4, à l'attention d'un utilisateur, d'une recommandation de ventiler ou de ne pas ventiler l'au moins une première zone Z1 pendant la période déterminée à venir.

De préférence, antérieurement à l'étape de détection E1 ou lors de l'étape de détection E1, le procédé comprend une étape de définition d'au moins une plage horaire durant laquelle l'utilisateur ne peut pas :
- manoeuvrer l'au moins un premier ouvrant 401,
- ni éventuellement ouvrir ou fermer le dispositif électromécanique d'occultation.

Cette plage horaire est par exemple, dans le cas d'une habitation, une plage de sommeil des occupants, par exemple une plage allant de 22 heures le soir à 7 heures le lendemain matin. Une telle plage horaire est par exemple définie et personnalisée aux occupants du bâtiment. Une telle plage horaire peut aussi différer selon les jours de la semaine.

Cette plage horaire est par exemple, dans le cas d'un bâtiment industriel ou tertiaire, une plage d'inoccupation du bâtiment par le personnel, par exemple une plage allant de 19 heures le soir à 6 heures le lendemain matin. Une telle plage horaire peut aussi différer selon les jours de la semaine. Par exemple, la plage s'étend sur toute la journée le samedi et le dimanche.

Les plages horaires peuvent aussi être définies automatiquement par apprentissage et/ou en utilisant des informations d'ensoleillement.

Dans l'étape E1 de détection de l'événement, l'événement peut être une action de l'utilisateur sur l'installation ou sur le dispositif 33. En particulier, l'action peut être une action antérieure à la période prédéterminée à venir et au cours de laquelle l'utilisateur prédétermine cette période prédéterminée à venir, c'est-à-dire qu'il définit l'instant de début, l'instant de fin et la durée de la période prédéterminée à venir.

Ainsi, une fois la plage horaire définie, lorsque le dispositif 33 détecte l'heure de début de la plage, il lance à cet instant l'étape E2. En alternative, un utilisateur prévoyant :
- une période où il ne pourra pas agir sur la ventilation du bâtiment (par exemple correspondant à une heure de coucher anticipé), ou
- une période d'inoccupation du bâtiment inhabituel,
peut signaler cette situation au dispositif 33. Concrètement, ce signalement revient à donner instruction au dispositif 33 de mettre en œuvre immédiatement l'étape E2. Ce signalement comprend encore de préférence une indication de durée de la période à venir durant laquelle l'utilisateur ne pourra pas agir sur la ventilation du bâtiment.

Lors de l'étape E2, le dispositif 33 met en œuvre des simulations. Il réalise :
- d'une part, une première simulation de l'évolution de la température dans l'au moins une première zone Z1 du bâtiment B pendant la période déterminée à venir où l'utilisateur ne pourra pas agir sur la ventilation et dans l'hypothèse d'une situation de ventilation, et
- d'autre part, une deuxième simulation de l'évolution de la température dans l'au moins une première zone Z1 du bâtiment B pendant la période déterminée à venir où l'utilisateur ne pourra pas agir sur la ventilation et dans l'hypothèse d'une situation d'absence de ventilation.

La première simulation est de préférence réalisée en considérant que le ou les premiers ouvrants 401 de la première zone Z1 sont grand ouverts et que le dispositif électromécanique d'occultation est ouvert pendant toute la période déterminée.

La deuxième simulation est de préférence réalisée en considérant que le ou les premiers ouvrants 401 de la première zone Z1 sont fermés et que le dispositif électromécanique d'occultation est fermé pendant toute la période déterminée.

D'autres simulations peuvent être mises en œuvre relativement à des configurations intermédiaires, notamment :
- une simulation où le ou les ouvrants 401 seraient ouverts et l'automatisme de commande du dispositif électromécanique d'occultation serait désactivé (ou inexistant), ou
- une simulation où le ou les ouvrants 401 seraient ouverts et l'automatisme de commande du dispositif électromécanique d'occultation serait activé, ou
- une simulation où le ou les ouvrants 401 seraient fermés et le dispositif électromécanique d'occultation serait désactivé (ou inexistant).
- une simulation où le ou les ouvrants 401 seraient fermés et le dispositif électromécanique d'occultation serait activé.

D'autres simulations encore peuvent prendre en compte des positions intermédiaires des ouvrants (partiellement ouverts ou fermés) ou des dispositifs d'occultation (partiellement ouverts ou fermés).

Alternativement, ou en complément, les simulations peuvent être basées sur une pluralité d'ouvrants ouverts agissant dans une même pièce ou dans des pièces différentes et créant des situations de courants d'air, soit souhaitées car elles participent à accélérer la ventilation naturelle dans la zone, soit non souhaitées. Un paramétrage adéquat des interactions entre plusieurs ouvrants peut ainsi conduire à des résultats de simulations spécifiques.

Ces simulations utilisent principalement une prévision d'évolution de la température extérieure au bâtiment pendant la période déterminée et un modèle d'échange thermique entre l'extérieur du bâtiment et la première zone Z1, afin de déterminer l'évolution de la température dans la première zone Z1.

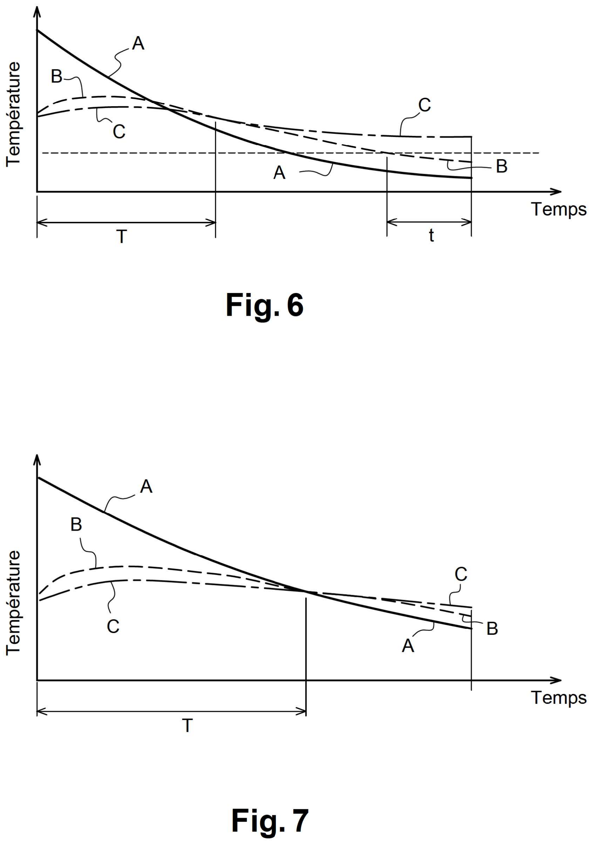

Un premier exemple de résultat de simulation est représenté sur la figure 6 et un deuxième exemple de résultat de simulation est représenté sur la figure 7. Sur ces figures :
- la courbe A représente l'évolution prévue de la température à l'extérieur du bâtiment pendant toute la période déterminée,
- la courbe B représente l'évolution calculée ou simulée de la température à l'intérieur de la zone Z1 du bâtiment pendant toute la période déterminée dans l'hypothèse d'une ventilation durant toute cette période déterminée,
- la courbe C représente l'évolution calculée ou simulée de la température à l'intérieur de la zone Z1 du bâtiment pendant toute la période déterminée dans l'hypothèse d'une absence de ventilation durant toute cette période déterminée,
- la double flèche T représente la durée qui doit s'écouler depuis le début de la période jusqu'à ce que la ventilation ait un effet positif sur la réduction de la température à l'intérieur de la première zone Z1 dans l'hypothèse d'une absence de ventilation durant toute cette période déterminée,
- la double flèche t représente une durée pendant laquelle la température dans la première zone Z1 est inférieure à un seuil de confort donné.

Sur les simulations représentées aux figures 6 et 7, on remarque que, dans certaines configurations (par exemple quand la température extérieure est supérieure à la température à l'intérieur de la première zone Z1, au début de la période déterminée), la ventilation a d'abord un effet d'augmentation de la température dans la première zone Z1, pendant une durée **T,** puis a ensuite un effet de diminution de la température dans la première zone Z1, c'est-à-dire qu'après cette durée T, la température dans la première zone Z1 est inférieure à ce qu'elle serait en l'absence de ventilation.

Lors de l'étape E3, le dispositif 33 communique à l'utilisateur les résultats des deux simulations évoquées plus haut, c'est-à-dire la simulation en situation de ventilation et la simulation en situation d'absence de ventilation. Cette communication peut prendre plusieurs formes. Par exemple, un graphique similaire à celui de la figure 6 ou de la figure 7 peut être affiché sur une interface graphique du dispositif 33. Par exemple encore, certaines caractéristiques chiffrées des simulations peuvent être affichées sur l'interface du dispositif 33. Ces caractéristiques peuvent comprendre :
- une estimation d'une heure à laquelle la température extérieure au bâtiment sera égale à la température dans la première zone Z1, et/ou
- une estimation d'une température dans la première zone en fin de période déterminée, et/ou
- une estimation d'une durée t durant laquelle la température dans l'au moins une première zone est inférieure au premier seuil de confort.

Chaque simulation peut ainsi comprendre un calcul d'un indice de confort, notamment basé sur des durées (T, t) de dépassement de seuils par la température de l'au moins une première zone pendant la période déterminée. Cet indice peut avoir une influence plus ou moins importante pour établir une recommandation qui est décrite plus bas.

Sur la base de la communication de ces informations, l'utilisateur peut prendre une décision de configurer la ventilation ou l'absence de ventilation dans la première zone Z1 pour la période déterminée à venir, autrement dit, l'utilisateur agit, sur la base de ces recommandations, en ouvrant ou en fermant le ou les ouvrants avant la période déterminée à venir. En particulier, il peut configurer le ou les ouvrants 401 de la première zone Z1 en position ouverte en position fermée et il peut configurer le dispositif d'occultation en position ouverte ou en position fermée. Il peut également, dans le cas d'un dispositif électromécanique d'occultation, configurer l'activation ou la désactivation de l'automatisme de commande associé à ce dispositif électromécanique d'occultation.

La communication de ces informations peut également prendre la forme de recommandations d'ouverture ou de fermeture d'une porte intermédiaire entre deux zones, de sorte à favoriser ou au contraire éviter des courants d'air lorsqu'il est recommandé à l'utilisateur, au cours de l'étape de communication, d'ouvrir plusieurs ouvrants dans des zones différentes ou plusieurs ouvrants dans une même zone.

Complémentairement ou alternativement à l'étape de communication E3, le dispositif 33 peut, dans une étape E4, émettre à l'attention de l'utilisateur une recommandation de ventiler ou de ne pas ventiler la première zone Z1. Cette recommandation est élaborée sur la base des résultats des simulations décrites plus haut. Notamment, la recommandation tient compte de :
- l'atteinte d'un éventuel seuil de température de confort, notamment en fin de période déterminée,
- l'amplitude d'augmentation de la température dans la zone Z1 en début de période de ventilation,
- la durée durant laquelle la température dans la zone Z1 est augmentée par rapport à une situation d'absence de ventilation en début de période de ventilation,
- la présence ou l'absence d'utilisateur dans la zone Z1 pendant la période déterminée.

Avantageusement, dans le cas où l'installation comprend un dispositif électromécanique d'occultation motorisée, le procédé peut comprendre une ou plusieurs étapes de commande de manœuvre motorisée de l'écran 2 équipant l'ouverture 1. Cette étape ou ces étapes de commande de manoeuvre motorisée sont avantageusement réalisées automatiquement pendant la période déterminée.

Cette étape ou ces étapes permettent d'atténuer les effets négatifs de la ventilation sur la température intérieure à la première zone Z1. Par exemple, une commande de fermeture de l'écran 2 en début de période de ventilation permet de limiter l'augmentation de la température dans la première zone Z1. Par exemple encore, une commande de fermeture de l'écran 2 en fin de période de ventilation permet d'éviter une trop forte baisse de température dans la première zone Z1. Par exemple encore, une commande d'ouverture de l'écran 2 le reste du temps de la période déterminée permet de maximiser le rafraîchissement de la première zone Z1.

Ainsi, de préférence, pendant la période déterminée :
- l'écran 2 est ouvert lorsqu'une température extérieure au bâtiment est inférieure à une température dans l'au moins une première zone, à moins que la température dans l'au moins une première zone soit inférieure au premier seuil de confort, et
- l'écran 2 est fermé le reste du temps ou lorsqu'une température extérieure au bâtiment est supérieure à une température dans l'au moins une première zone.

De préférence, les simulations évoquées plus haut tiennent compte d'un tel fonctionnement du dispositif électromécanique d'occultation motorisée automatique, c'est-à-dire que les simulations tiennent compte du fait que pendant la période déterminée, en situation de ventilation, l'écran 2 sera dans certaines phases temporelles ouvert et dans d'autres phases temporelles fermé.

De préférence, la recommandation de ventiler ou de ne pas ventiler est émise lors de l'étape E4 :
- en continu pendant la période déterminée, ou
- à intervalles de temps réguliers pendant la période déterminée, ou
- à chaque fois que la configuration devrait être modifiée pendant la période déterminée, c'est-à-dire à chaque fois qu'il serait pertinent de manoeuvrer le ou les ouvrants 401 pour modifier leur configuration ou activer ou de désactiver l'automatisme de commande du dispositif électromécanique d'occultation. Dans le cas où des capteurs de détection de la configuration des ouvrants 401 sont en fonction, la recommandation peut ne pas être envoyée si le ou les ouvrants se trouvent déjà dans la configuration recommandée.

Grâce à une telle étape d'émission, il est possible, en cours de période déterminée et en cas de présence imprévue ou de disponibilité imprévue de l'utilisateur (par exemple une phase de réveil de l'utilisateur au milieu de la nuit), de modifier, par l'action de l'utilisateur, la configuration du ou des ouvrants 401 et/ou la configuration du dispositif électromécanique d'occultation de façon à optimiser la ventilation. Concrètement, par exemple sur la base d'une recommandation en continu, l'utilisateur peut, dans la nuit, ouvrir le ou les ouvrants 401 alors que ceux-ci n'avaient pas été ouverts en début de nuit. Alternativement, l'utilisateur peut, dans la nuit, fermer le ou les ouvrants 401 alors que ceux-ci avaient été ouverts en début de nuit.

Selon l'utilisation, l'émission de la recommandation peut être plus ou moins discrète. On comprend que, dans le cas d'une recommandation devant être émise pendant une phase de sommeil de l'utilisateur, l'émission consiste de préférence en un simple affichage de la recommandation. Dans le cas d'un bâtiment industriel ou tertiaire, l'émission de la recommandation peut comprendre un signal sonore. Ainsi, un personnel exceptionnellement présent dans le bâtiment peut agir pour modifier la configuration de ventilation de la première zone Z1.

De préférence, le procédé comprend en outre les étapes suivantes :
- simulation d'une évolution de la température dans une deuxième zone Z2 du bâtiment pendant la période déterminée dans l'hypothèse d'une ventilation et d'une évolution de la température dans la deuxième zone du bâtiment pendant la période déterminée à venir dans l'hypothèse d'une absence de ventilation,
- communication des simulations à un utilisateur et/ou émission, à l'attention d'un utilisateur, d'une recommandation de ventiler ou de ne pas ventiler la deuxième zone Z2 pendant la période déterminée à venir.

En conséquence, l'utilisateur peut être informé à un même moment de l'opportunité de ventiler ou non différentes zones du bâtiment. Il peut donc, dans une même opération, effectuer toutes les configurations de ventilation des différentes zones du bâtiment. Concrètement, l'utilisateur peut être informé à un même instant de la configuration de l'ensemble de la ventilation du bâtiment qui apparaît la plus appropriée. Il ne reçoit donc pas des messages décalés dans le temps et qui concerneraient différentes zones du bâtiment. Par ailleurs, les ventilations de différentes zones du bâtiment peuvent avoir une influence mutuelle sur la température d'une zone donnée du bâtiment. Grâce aux solutions selon l'invention, les utilisateurs peuvent prendre des décisions de ventilation d'un bâtiment de manière éclairée et parfois contre intuitive. Notamment, ils pourront arriver à une conclusion d'opportunité d'ouvrir un ouvrant du bâtiment pour le rafraîchir alors que la température à l'extérieur du bâtiment est supérieure à celle à l'intérieur du bâtiment.

## Revendications

1. Procédé de gestion de la ventilation d'au moins une première zone (Z1) d'un bâtiment (B) munie d'une ouverture (1) par :
- configuration d'au moins un premier ouvrant (401) manoeuvrable manuellement et équipant l'ouverture (1) de l'au moins une première zone (Z1), et
- éventuellement, configuration d'un mode de fonctionnement d'un dispositif électromécanique d'occultation de l'ouverture (1) de l'au moins un première zone (Z1),
le procédé comprenant les étapes suivantes :
- détection (E1) d'un événement ou d'une heure,
- simulation (E2) d'une évolution de la température dans l'au moins une première zone (Z1) du bâtiment (B) pendant une période déterminée à venir dans l'hypothèse d'une situation de ventilation liée à une ouverture du premier ouvrant et éventuellement du dispositif électromécanique d'occultation et d'une évolution de la température dans l'au moins une première zone (Z1) du bâtiment pendant la période déterminée à venir dans l'hypothèse d'une situation d'absence de ventilation liée à une fermeture du premier ouvrant et éventuellement du dispositif électromécanique d'occultation,
- communication (E3) des simulations à un utilisateur et/ou émission (E4), à l'attention d'un utilisateur, d'une recommandation de ventiler, par ouverture du premier ouvrant et éventuellement du dispositif électromécanique d'occultation, ou de ne pas ventiler, par fermeture du premier ouvrant et éventuellement du dispositif électromécanique d'occultation, l'au moins une première zone (Z1) pendant la période déterminée à venir.

2. Procédé de gestion selon la revendication 1, **caractérisé en ce que** le procédé comprend une étape de définition d'au moins une plage horaire durant laquelle l'utilisateur ne peut pas manoeuvrer l'au moins un premier ouvrant (401).

3. Procédé de gestion selon la revendication 1 ou 2, **caractérisé en ce que** le procédé comprend une étape de commande de manoeuvre motorisée d'un écran (2) équipant l'au moins une ouverture.

4. Procédé de gestion selon la revendication précédente, **caractérisé en ce que**, pendant la période déterminée :
- l'écran (2) est ouvert lorsqu'une température extérieure au bâtiment est inférieure à une température dans l'au moins une première zone, et
- l'écran (2) est fermé lorsqu'une température extérieure au bâtiment est supérieure à une température dans l'au moins une première zone ou lorsqu'une une température dans l'au moins une première zone est inférieure à un premier seuil.

5. Procédé de gestion selon l'une des revendications précédentes, **caractérisé en ce que** chaque simulation comprend :
- la détermination d'une estimation d'une heure à laquelle une température extérieure au bâtiment est égale à une température dans l'au moins une première zone, et/ou
- la détermination d'une estimation d'une température dans l'au moins une première zone en fin de période déterminée à venir, et/ou au
- la détermination d'une estimation d'une durée (t) durant laquelle une température dans l'au moins une première zone est inférieure à un premier seuil.

6. Procédé de gestion selon l'une des revendications précédentes, **caractérisé en ce que** la recommandation de ventiler ou de ne pas ventiler est émise :
- en continu pendant la période déterminée, ou
- sur demande, notamment sur demande de l'utilisateur, ou
- à intervalles de temps réguliers pendant la période déterminée, ou
- à chaque fois que la configuration devrait être modifiée pendant la période déterminée.

7. Procédé de gestion selon l'une des revendications précédentes, **caractérisé en ce que** chaque simulation comprend un calcul d'un indice de confort, notamment basé sur des durées de dépassement de seuils par la température de l'au moins une première zone pendant la période déterminée.

8. Procédé de gestion selon l'une des revendications précédentes, **caractérisé en ce qu'**il comprend en outre les étapes suivantes :
- simulation d'une évolution de la température dans une deuxième zone (Z2) du bâtiment pendant la période déterminée à venir dans l'hypothèse d'une ventilation et d'une évolution de la température dans la deuxième zone du bâtiment pendant la période déterminée à venir dans l'hypothèse d'une absence de ventilation,
- communication des simulations à un utilisateur et/ou émission, à l'attention d'un utilisateur, d'une recommandation de ventiler ou de ne pas ventiler la deuxième zone (Z2) pendant la période déterminée à venir.

9. Dispositif (33), notamment terminal mobile (33), comprenant des éléments (14, 34, 35, 36, 37, 38, 39) matériels et logiciels configurés pour mettre en oeuvre le procédé de gestion selon l'une quelconque des revendications 1 à 8.

10. Installation (100) comprenant :
- un dispositif (33) selon la revendication précédente,
- un moyen (98) de détermination de l'évolution de la température extérieure à un bâtiment au cours des prochaines heures, notamment au cours de la nuit à venir, et
- au moins un thermomètre (99) permettant de connaître une ou plusieurs températures à l'intérieur du bâtiment.

11. Produit programme d'ordinateur comprenant des instructions de code de programme enregistrées sur un support lisible par ordinateur pour mettre en oeuvre les étapes du procédé selon l'une quelconque des revendications 1 à 8 lorsque ledit programme fonctionne sur un ordinateur.

12. Support d'enregistrement de données, lisible par un ordinateur, sur lequel est enregistré un programme d'ordinateur comprenant des instructions de code de programme de mise en oeuvre du procédé selon l'une des revendications 1 à 8.
